# EUROPEAN PATENT SPECIFICATION

(11) **EP 1 160 393 B1**
(45) Date of publication and mention of the grant of the patent: **17.05.2006**
(21) Application number: 00990030.9
(22) Date of filing: 28.12.2000
(51) Int. Cl.: E04G 13/02

(54) **FORMWORK FOR CYLINDRICAL COLUMNS**
SCHALUNG FÜR ZYLINDRISCHE SÄULEN
COFFRAGE POUR COLONNES CYLINDRIQUES

(30) Priority: 04.01.2000 ES 200000010; 17.07.2000 ES 200001776; 02.11.2000 ES 200002631
(43) Date of publication of application: 05.12.2001
(73) Proprietor: Valero Salinas, D. José Manuel, 3350 Cox (ES)
(72) Inventor: Valero Salinas, D. José Manuel, 3350 Cox (ES)
(74) Representative: Alvarez, Fernando
(86) International application number: PCT/ES2000/000496
(87) International publication number: WO 2001/049955

(56) References cited:
- EP-A- 0 593 009
- WO-A-99/43912
- ES-A- 2 004 086
- GB-A- 648 809
- US-A- 1 395 553

## Description

### OBJECT OF THE INVENTION

The present invention refers to a new formwork for obtaining cylindrical columns, which has been specially conceived as a disposable or single-use element and which is specially adapted for obtaining columns made of reinforced concrete.

The object of the invention is to achieve optimal results by using such a formwork with a simple and therefore economical structure, with the highest dimensional and formal precision and with an optimum finishing of the column to be obtained.

### BACKGROUND OF THE INVENTION

In order to build a column made of, for example, reinforced concrete, it is required Lo have a mould or formwork to provide the definitive configuration and dimensions to the column; said formwork must comply with two different but complementary characteristics: it must assure a perfect superficial finishing of the column and its cost has to be sufficiently low to make it profitable for the constructor, especially taking into account that this is a disposable formwork.

In this sense it is worth to mention the Spanish patent having application number 9800419, of which the present applicant is the owner, wherein a disposable formwork for columns is described, being structured from a tubular core or body, based on a plurality of expanded polystyrene pieces, fixed to each other by means of adhesive along their joint edges; said tubular core being innerly coated with a plastic sheet constituting a watertight barrier, fixed to said core by means of an adhesive layer, externally, the whole formwork is completed with a reticulated support made of a glass fibre mesh, rolled up helicoidally on the tubular core and fixed to the same also by means of adhesive, in such a way that said mesh provides to the whole set an appropriate mechanical rigidity against the radial forces generated by the concrete mass to be placed inside the formwork.

This solution, specially designed for columns having a rectangular or square cross section, has been subsequently improved with the Certificate of Addition to said patent having the application number 9802487, wherein it is foreseen to replace the plastic sheet, constituting a watertight barrier and fixed to the core, by a series of plates made of plasticised wood on their inner side, or made of rigid plastic, said plates being fixable to each other with the help of adhesive tapes conveniently mounted on their inner side, in correspondence with the joining edges of the plates, so as to configure an inner tubular body having a substantially smooth and watertight surface, on which the polystyrene pieces were then placed, constituting the intermediate rigid tubular body and on which, in turn, finally, the external fixing layer made of said glass fibre mesh rolled up helicoidally was established, for providing the appropriate mechanical resistance to the formwork as a whole.

The aforementioned formwork is still designed for columns having a prismatic cross-section and the presence of expanded polystyrene is required for providing the formwork with an external cylindrical surface in order to enable the operation leading to the placement of the glass fibre mesh rolled up helicoidally and to enable its functionality.

A formwork is known through PCT WO 99/43912, being the base of the preamble of claim 1, with the aim of producing cylindrical columns, although what are produced are prismatic columns with a considerable number of flat sides or faces, which makes the column as a whole tend to have a cylindrical configuration.

This PCT provides that the formwork is comprised of a plurality of slats of reduced width, which may be produced from wood, plastic or another rigid material, which is sealed by an internal self-adhesive film, and which externally receive fibreglass mesh, helically wound, which given the formwork the correct mechanical resistance.

The main problem with this formwork is that, as has been mentioned above, said slats define between them more or less obtuse dihedrons, which will give the column edges, making it impossible to produce a perfectly cylindrical column with a continuous surface.

### DESCRIPTION OF THE INVENTION

The problem is solved by the features of the independent claim. Further embodiments of the invention are defined in the dependent claims.

The formwork the invention proposes resolves in a fully satisfactorily manner the aforementioned problem, allowing cylindrical columns to be produced, with perfect surface continuation and with maximum structural simplicity for the formwork, with the consequent impact this has on costs.

To do this, and more specifically, the formwork proposed by the invention is comprised of a sheet of laminated wood or rigid plastic, whose width coincides with the perimeter or circumference of the column to be produced and whose length coincides, in turn, with the height of said column, with the special feature that said sheet is affected, on its outer side, by a plurality of longitudinal, parallel and uniformly distributed cuts, considerably close to one another, which mainly affect the width of the sheet, e.g. at an order of 80% of said width, so that the sheet deforms easily to become a cylindrical tube, of continuous internal surface, which, in turn, eliminates the need for the classic internal self-adhesive film.

Optionally, and for financial reasons, non-laminated wood can be used, whereto a film is fixed on what must be its inner face, which preferably will be fixed to the sheet of wood and simultaneously to the groove thereof.

Once the cylindrical configuration has been adopted, this grooved sheet receivers the classic outer coating based on fibreglass mesh, wound helically, with or without the interposition of an expanded polyethylene tubular body which aides to rigidity it.

Said fibreglass mesh can be replaced by a self-adhesive strip, made exclusively with fibreglass strands in longitudinal direction, which are those which are effective after the helical winding thereof over the rest of the formwork, which means that on the one side the transversal lines of the classic mesh are eliminated, and on the other, the fixing of said sheath is facilitated.

To complement the aforementioned, and in accordance with another of the characteristics of the invention, it has been provided that said sheet of wood collaborates with a pair of U-section end rings with diameter in accordance with the formwork, wherein the ends of the sheet of wood or plastic are designed to be introduced, once this adopts the cylindrical configuration, facilitating the forming of said sheet and giving the formwork greater rigidity to transport it, whilst it enables the circular form of the section of the formwork to be perfectly ensured on positioning it on site.

### DESCRIPTION OF THE DRAWINGS

To complement the description being made and in order to help towards a better understanding of the characteristics of the invention, in accordance with a preferred example of embodiment thereof, a set of drawings is attached as an integral part of said description, wherein the following has been represented with an illustrative, non-limiting character:
Figure 1 shows, according to a perspective view, a formwork for cylindrical columns, made in accordance with the state of the art wherein in said formwork there participates a plurality of narrow slats fixed by an outer fibreglass mesh sheath.
Figure 2 shows the formwork of the previous figure provided with belts or collars suitably distributed throughout it.
Figure 3 shows a representation similar to the previous figures, with the formwork rigidified by a continuous tubular body of expanded polystyrene.
Figure 4 shows a perspective schematic representation of the sheet of wood or rigid plastic which participates in the formwork of the .invention, wherein it shows that is has to be the outer face of said sheet.
Figure 5 shows a profile of the sheet of the previous figure.
Figure 6 again shows a profile of sheets 4 and 5, once it has adopted the definitive cylindrical configuration of the formwork.
Figure 7 shows a diametric section of one of the closing rings designed to be coupled to the ends of the sheet of figures 4 to 6, after the cylindrical forming of said sheet.

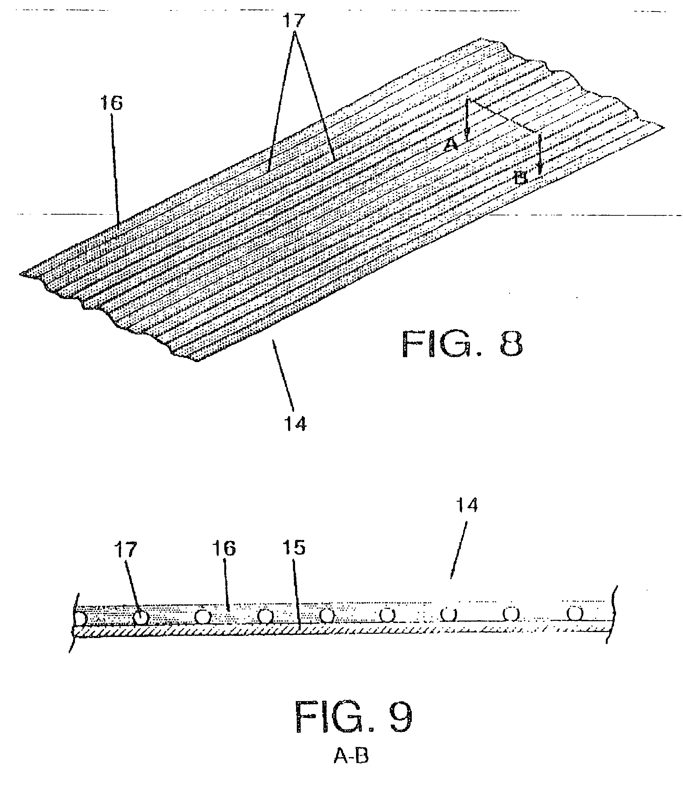

Figure 8 shows a partial perspective detail of the self-adhesive strip provided as means of externally rigidifying the formwork.
Figure 9 finally shows a cross-section detail of the slat of the previous figure.

### PREFERRED EMBODIMENT OF THE INVENTION

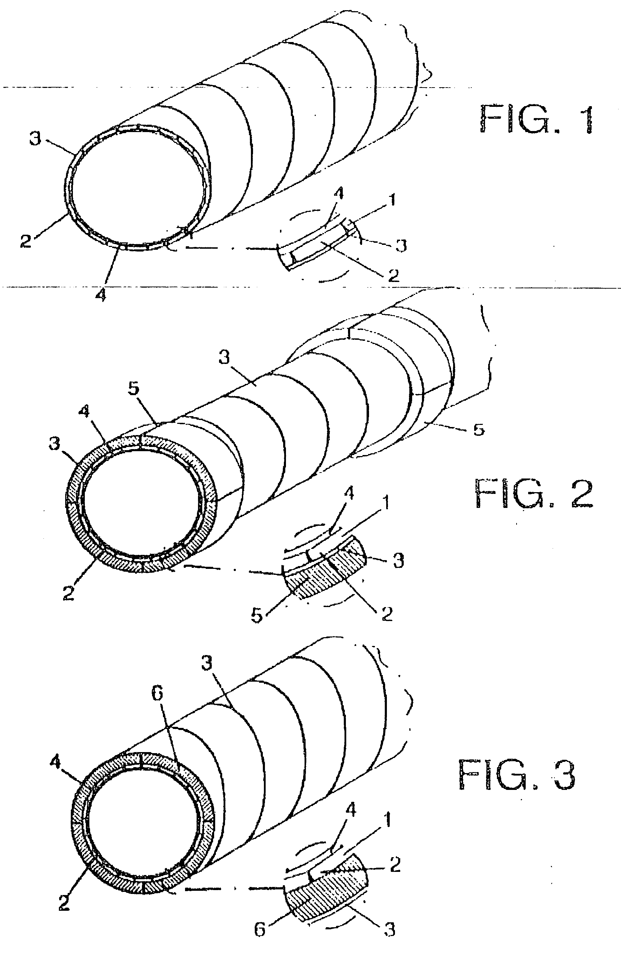

As has previously been stated, figure 1 shows a formwork for conventional cylindrical columns, structured from a tubular body (1) wherein there participates a plurality of rigid slats (2), of laminated wood or plastic, an annular body which is conveniently established with the collaboration of fibreglass mesh (3), wound helically on its outer face, and which in turn is perfectly sealed by an internal self-adhesive film (4), which covers the entire internal surface of the annular body (1), gap-free.

The formwork thus structured is perfectly valid to produce a quasi-cylindrical column, with a diameter in accordance with that of the formwork, but really with a polygonal prismatic configuration, of considerably many more sides, which may be stabilized by a plurality of belts or collars (b) suitably distributed throughout the formwork and any appropriate rigid material, e.g. expanded polystyrene or even metal in nature, said belts or collars (5) also being able to be substituted by a continuous tubular body (6), as shown in figure 3, based on the same said materials and bering positioned in this case the fibreglass mesh sheath (3) on the outside of the expanded polystyrene tubular body.

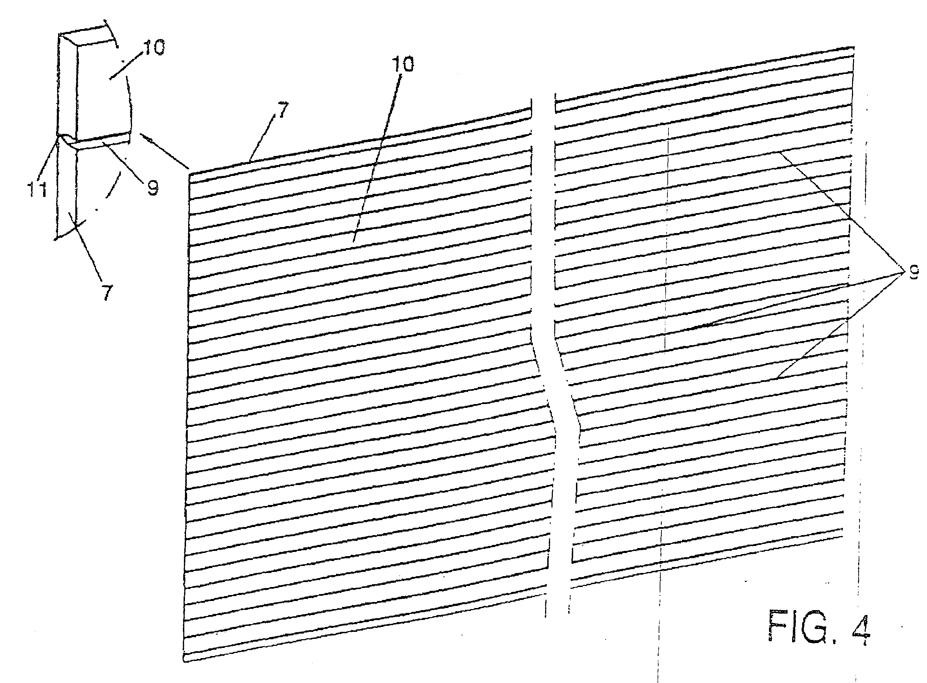

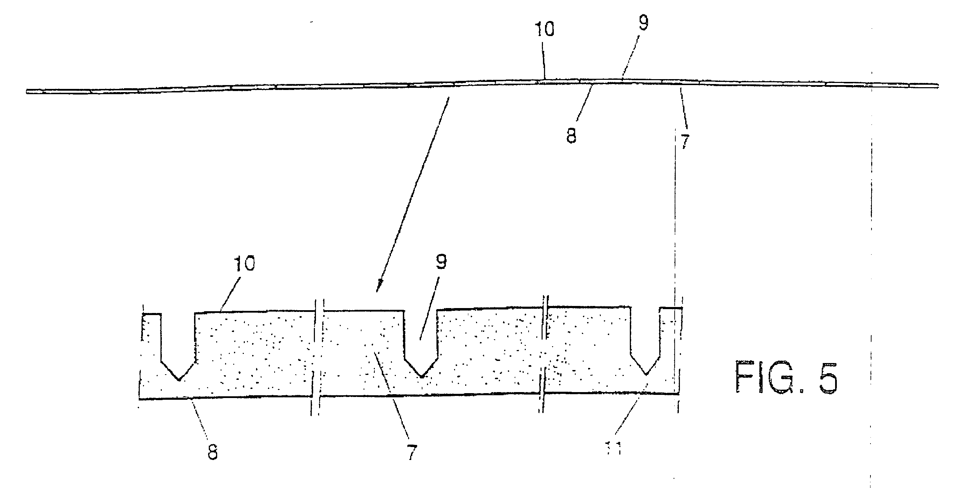

So, now in accordance with the invention and as has been represented in figures 4 to 7, it has been provided that, instead of said rigid slats (2) a single sheet (7), is used as a base element of the formwork, which may be rigid plastic or laminated wood for which reason it has to be on its internal face (8), a rectangular-shaped sheet, with a length in accordance with the column to be produced, and a thickness, in turn, in accordance with the perimeter of said column.

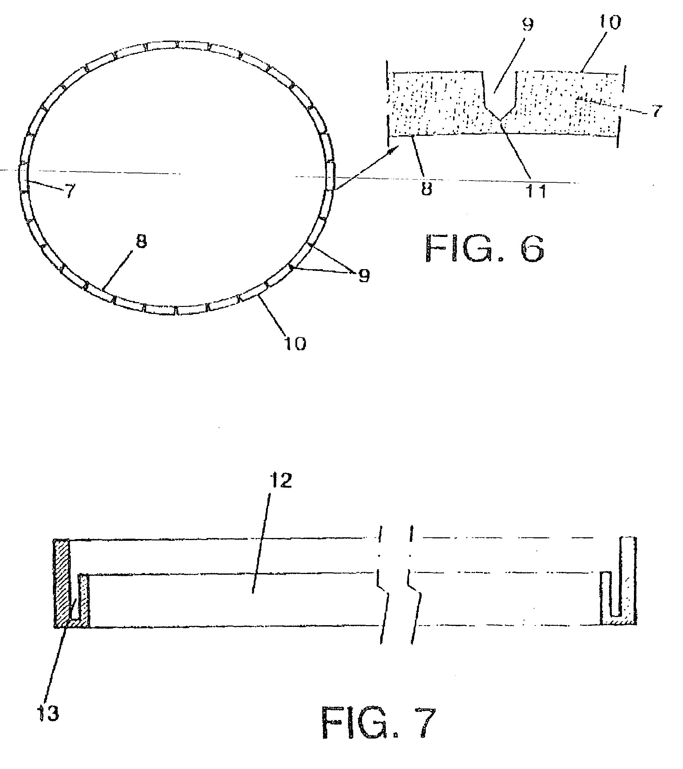

This sheet (7), initially flat, is provided, to facilitate its forming, with a plurality of longitudinal cuts or grooves (9), which mainly affect its width, as is especially observed in ligure 5, these grooves being open towards its outer face (10) and determining weakened areas (11) which give the sheet (7) as a whole the suitable deformability for an easy transformation of the flat element of ligure 5 in the tubular cylindrical element of figure 6.

This tubular cylindrical element of figure 6 is positionally stabilized with the collaboration of a pair of narrow rings (12), as is shown in figure 7, U-section rings, whose groove (13) is designed to receive the corresponding end of the tubular body formed by the sheet (7), the lateral branches of said "U" being asymmetrical, as is also observed in figure 7, to facilitate the mounting and forming of the sheet (7), which thus adopts, and via the end rings (12), a perfectly cylindrical configuration. Nevertheless, these rings can be simply rectangular-shaped, sheet (7) sheaths and provided with a weakening to facilitate their cutting and elimination, together with the rest of the formwork.

The sheet (7) may have a thickness in the order of 2.5 millimetres and its grooves (9) will be as deep as the weakened areas (11) having a height in the order of 0.3 to 0.5 millimetres, said grooves (9) in turn being uniformly distributed and separated at a distance between 35 and 50 millimetres, in accordance with the curve radius of the column to be produced produce, this data being merely as an example, as said parameters can vary within the pre-established limits in function of the specific requirements of each case.

Additionally, the formwork will be stabilized, as in the case of figures 1 to 3, with the collaboration of a sheath external to the sheet (7), not represented in the drawings, of fibreglass mesh wound helically with or without interposition of an expanded polystyrene tubular body, a plurality of collars of any rigid material, which collaborate with said end rings (12), being equally able to be established outside said fibreglass mesh and uniformly distributed throughout the formwork.

Both the fibreglass mesh (3) which appears in the embodiment of figures 1 to 3, and that provided and not represented in the embodiments of figures 4 to 6, may be replaced by a self-adhesive strip (14), e.g. from a support (15) of paper or similar, which on one of its faces incorporates a layer (16) of glue, wherein the longitudinal fibreglass strands remain embedded (17), uniformly distributed, so that the support (15) acts simultaneously as a support for the fibreglass strands (17), physically independent from one another, and together with their layer of self-adhesive glue (16) as a means of fixing the strip (14) to the formwork, in absence of the classic transversal strands which were necessary in conventional mesh to positionally retain its longitudinal strands, without deteriorating the functional features of this sheath, therefore therein the only ones that support the stresses to which the formwork will be subjected are said longitudinal strands (17), which, after winding the strip, will be noticeably transversal to the formwork axis, whilst the classic transversal strands of the band, after said winding, are positioned parallel to the axis of the formwork and are consequently discontinuous and inoperative.

## Claims

1. Formwork for cylindrical columns, of the type incorporating an annular body produced using plastic-coated wood, rigid plastic or similar, stabilised by means of an external casing made of fibreglass mesh wrapped helicoidally around said tubular body, **characterised in that** said annular body is materialised in an initially flat plate (7), of length in accordance with the height of the column to be produced and width, in turn, in accordance with the evolution of said column, a plate (7) affected by a plurality of longitudinal cuts or grooves (9), that are open towards their external face (10) and determine, in said plate (7), lines (11) that are noticeably weakened, allowing said plate to be deformed so that it can go from its initial flat configuration to a tubular cylindrical configuration, in accordance with the column to be produced.

2. Formwork for cylindrical columns, according to claim 1, **characterised in that** a plurality of strips or braces (5) are fixed on said fibreglass mesh-based casing, suitably arranged throughout the formwork, made of a rigid material such as, for example, metal or expanded polystyrene.

3. Formwork for cylindrical columns, according to claim 1, **characterised in that**, two rigid U-shaped end rings (12) collaborate with said plate (7), and each determines an annular groove (13) which incorporates therein the corresponding end of the plate (7), ensuring a perfect cylindrical configuration of said plate (7) and, consequently, of the formwork as a whole.

4. Formwork for cylindrical columns, according to claim 3, **characterised in that** the side edges of the rings (12) of the U-shaped profile are asymmetrical in order to facilitate the incorporation of the corresponding end of the plate (7) within the groove (13) and the cylindrical configuration of said plate.

5. Formwork for cylindrical columns, according to previous claims, **characterised in that**, as an external support structure (3), a self-adhesive strip (14) which comprises a plurality of fibreglass threads (17), arranged longitudinally in a uniform distribution is incorporated therein, in such a way that said strip is fixed by its own self-adhesive nature to the rest of the formwork's structure, with a helicoidal trajectory and, preferably, with a partial overlap thereof, and in such a way that the fibres are in an appreciably transversal arrangement in relation to the imaginary axis of the formwork.

6. Formwork for cylindrical columns, according to claim 5, **characterised in that** said self-adhesive strip (14) is materialised in a support (15), consisting of a paper sheet or similar, which, on one of its sides, incorporates a layer (16) of self-adhesive glue, wherein the fibreglass threads (17) are embedded.

## Patentansprüche

1. Schalung für zylindrische Pfeiler von der Art, die einen ringförmigen Körper einschließt, der hergestellt wird, indem mit Kunststoff überzogenes Holz, starrer Kunststoff oder Ähnliches verwendet wird, und der mit Hilfe eines externen Mantels stabilisiert wird, der aus spindelförmig um den besagten röhrenförmigen Körper gewickeltes Glasfaser-Netz besteht, **dadurch gekennzeichnet, dass** der besagte ringförmige Körper in einer ursprünglich flachen Platte (7) verwirklicht ist, mit einer Länge entsprechend der Höhe des herzustellenden Pfeilers und einer Breite, die wiederum der Entwicklung des besagten Pfeilers entspricht, eine Platte (7), die von einer Vielzahl von Schnitten bzw. Kerben (9) in Längsrichtung beeinflusst wird, die zu ihrer äußeren Seite (10) hin offen sind, und die in der besagten Platte (7) Linien (11) bestimmen, die merklich geschwächt sind, was es der besagten Platte ermöglicht, verformt zu werden, sodass sie von ihrer ursprünglich flachen Konfiguration in eine röhrenförmig zylindrische Konfiguration übergehen kann, in Übereinstimmung mit dem herzustellenden Pfeiler.

2. Schalung für zylindrische Pfeiler nach Anspruch 1, **dadurch gekennzeichnet, dass** eine Vielzahl von Streifen oder Kiammern (5) auf dem besagten, auf Glasfaser-Netz basierendem Mantel befestigt und in angemessener Weise über die Schalung angeordnet sind, die aus einem starren Material wie zum Beispiel Metall oder aufgeschäumtem Polystyrol bestehen.

3. Schalung für zylindrische Pfeiler nach Anspruch 1, **dadurch gekennzeichnet, dass** zwei starre U-förmige Endringe (12) mit der besagten Platte (7) zusammen arbeiten, von denen jeder eine ringförmige Kerbe (13) bestimmt, die darin das entsprechende Ende der Platte (7) einschließt und eine perfekte zylindrische Konfiguration der besagten Platte (7) und somit der Schalung als Ganzem gewährleistet.

4. Schalung für zylindrische Pfeiler nach Anspruch 3, **dadurch gekennzeichnet, dass** die seitlichen Kanten des Rings (12) der U-förmigen Profile asymmetrisch sind, um den Einschluss des entsprechenden Endes der Platte (7) innerhalb der Kerbe (13) und die zylindrische Konfiguration der besagten Platte zu ermöglichen.

5. Schalung für zylindrische Pfeiler nach den vorherigen Ansprüchen, **dadurch gekennzeichnet, dass** darin ein selbstklebender Streifen (14) als externe Trägerstruktur (3) in der Weise eingeschlossen ist, der eine Vielzahl von in Längsrichtung ausgerichteten und gleichmäßig verteilten Glasfaser-Fäden (17) beinhaltet, dass der besagte Streifen durch seine eigene selbstklebende Natur an der restlichen Schalungs-Struktur befestigt ist, mit einer spindelförmigen Bahn und vorzugsweise mit einer teilweisen Überlappung derselben, und so, dass die Fasern sich in einer offensichtlich transversalen Anordnung gegenüber der imaginären Achse der Schalung befinden.

6. Schalung für zylindrische Pfeiler nach Anspruch 5, **dadurch gekennzeichnet, dass** der selbstklebende Streifen (14) in einem Träger (15) verwirklicht ist, der aus einem Blatt Papier oder Ähnlichem besteht, das auf der einen Seite eine Schicht (16) von selbstklebendem Klebstoff beinhaltet, in die die Glasfaser-Fäden (17) eingebettet sind.

## Revendications

1. Coffrage pour colonnes cylindriques, du type comportant un corps annulaire fabriqué avec du bois recouvert de plastique, un plastique rigide ou un matériau similaire, stabilisé à l'aide d'un revêtement externe fait d'un filet de fibre de verre enroulé de façon hélicoïdale autour dudit corps tubulaire, **caractérisé en ce que** ledit corps annulaire est réalisé à partir d'une plaque plate initiale (7), d'une longueur correspondant à la hauteur de la colonne à fabriquer et d'une largeur correspondant, quant à elle, au développement de ladite colonne, une plaque (7) affectée d'une pluralité d'entailles longitudinales, ou rainures (9), qui sont ouvertes vers leur face externe (10) et qui déterminent, dans ladite plaque (7), des lignes (11) qui sont sensiblement fragilisées, ce qui permet à ladite plaque d'être déformée de telle sorte qu'elle puisse passer de sa configuration initiale plate à une configuration cylindrique tubulaire, correspondant à la colonne à fabriquer.

2. Coffrage pour colonnes cylindriques, selon la revendication 1, **caractérisé en ce qu'**une pluralité de bandes ou de pièces de renforcement (5) sont fixées sur ledit revêtement fait d'un filet de fibre de verre, disposées de façon appropriée sur tout le coffrage, fabriquées dans un matériau rigide tel que, par exemple, le métal ou le polystyrène expansé.

3. Coffrage pour colonnes cylindriques, selon la revendication 1, **caractérisé en ce que**, deux segments à l'extrémité en U rigide (12) fonctionnent avec ladite plaque (7), et chacun détermine une rainure annulaire (13) qui intègre en elle l'extrémité correspondante de la plaque (7), garantissant une configuration cylindrique parfaite de ladite plaque (7) et, par conséquent, du coffrage dans son ensemble.

4. Coffrage pour colonnes cylindriques, selon la revendication 3, **caractérisé en ce que**, les bords latéraux des segments (12) du profil en U sont asymétriques de façon à faciliter l'intégration de l'extrémité correspondante de la plaque (7) dans la rainure (13) et la configuration cylindrique de ladite plaque.

5. Coffrage pour colonnes cylindriques, selon les revendications précédentes, **caractérisé en ce que**, en guise de structure de support externe (3), une bande autoadhésive (14) qui comprend une pluralité de fils de fibre de verre (17), disposée longitudinalement en une répartition uniforme y est intégrée, de telle sorte que ladite bande soit fixée de par sa propre nature adhésive au reste de la structure du coffrage, avec une trajectoire hélicoïdale et, de préférence, avec un chevauchement partiel de celle-ci, et de telle façon que les fibres soient dans une disposition sensiblement transversale par rapport à l'axe imaginaire du coffrage.

6. Coffrage pour colonnes cylindriques, selon la revendication 5, **caractérisé en ce que**, ladite bande autoadhésive (14) est réalisée dans un support (15), consistant en une feuille de papier, ou un matériau similaire, qui, sur l'un de ses côtés, comporte une couche (16) de colle autoadhésive dans laquelle les fils de fibre de verre (17) sont scellés.
